# EUROPEAN PATENT SPECIFICATION

(11) **EP 2 034 600 B1**
(45) Date of publication and mention of the grant of the patent: **15.12.2010**
(21) Application number: 07115686.3
(22) Date of filing: 05.09.2007
(51) Int. Cl.: H02M 5/458, H02M 7/48

(54) **Single-phase to three-phase converter**
Ein-Phasen-zu-Drei-Phasen-Wandler
Circuit convertisseur d'un système de phase unique en un système triphasé

(43) Date of publication of application: 11.03.2009
(73) Proprietor: ABB Oy, 00380 Helsinki (FI)
(72) Inventor: Viitanen, Tero, 01710 Vantaa (FI); Niemi, Erkki, 02660 Espoo (FI)
(74) Representative: Valkeiskangas, Tapio Lassi Paavali

(56) References cited:
- US-A- 5 563 487
- US-A1- 2002 012 255
- DATABASE INSPEC [Online] THE INSTITUTION OF ELECTRICAL ENGINEERS, STEVENAGE, GB; 31 July 1999 (1999-07-31), BLAABJERG F ET AL: "Adaptive SVM to compensate DC-link voltage ripple for four-switch three-phase voltage-source inverters" XP002468931 Database accession no. 6311406 & IEEE Transactions on Power Electronics IEEE USA, vol. 14, no. 4, 1 July 1999 (1999-07-01), - 31 July 1999 (1999-07-31) pages 743-752, ISSN: 0885-8993
- AZAB M ET AL: "Novel flux and torque control of induction motor drive using four switch three phase inverter" IECON'01. PROCEEDINGS OF THE 27TH. ANNUAL CONFERENCE OF THE IEEE INDUSTRIAL ELECTRONICS SOCIETY. DENVER, CO, NOV. 29 - DEC. 2, 2001, ANNUAL CONFERENCE OF THE IEEE INDUSTRIAL ELECTRONICS SOCIETY, NEW YORK, NY : IEEE, US, vol. VOL. 1 OF 3. CONF. 27, 29 November 2001 (2001-11-29), pages 1268-1273, XP010572960 ISBN: 0-7803-7108-9
- DATABASE COMPENDEX [Online] ENGINEERING INFORMATION, INC., NEW YORK, NY, US; 5 May 2007 (2007-05-05), SUN DAN ET AL: "Four-switch inverter fed PMSM DTC with SVM approach for fault tolerant operation" XP002468932 Database accession no. E20074210871000 & PROC. IEEE INT. ELEC. MACH. DRIVES CONF.; PROCEEDINGS OF IEEE INTERNATIONAL ELECTRIC MACHINES AND DRIVES CONFERENCE, IEMDC 2007; PROCEEDINGS OF 2007 IEEE INTERNATIONAL ELECTRIC MACHINES AND DRIVES CONFERENCE, IEMDC 2007 2007, vol. 1, 3 May 2007 (2007-05-03), - 5 May 2007 (2007-05-05) pages 295-299,

## Description

### FIELD OF THE INVENTION

The present invention relates to a converter for converting electrical energy, and more particularly to a converter that converts electrical energy from a single-phase supply to a three-phase load.

### BACKGROUND OF THE INVENTION

A single-phase AC voltage is used commonly for powering three-phase loads by using a converter which converts the input single-phase supply to a three-phase output voltage. The basic structure of a converter includes an input bridge, a DC link and an inverter stage. Input bridge, such as a diode rectifier, rectifies inputted AC voltage. Input bridge may also contain an inductor for suppressing current harmonics and a power factor correction circuit.

The rectified voltage is fed from the rectifier to the DC link. This DC link, also called as intermediate voltage circuit, contains a capacitor or a capacitor bank for storing and smoothing the rectified voltage.

The inverter stage of the converter is coupled to the DC link and uses the DC voltage to generate AC voltage to the load. The magnitude and amplitude of the AC voltage generated with the inverter is variable and controllable, thereby enabling driving of a motor and thus forming an AC drive.

The above-mentioned basic parts of the converter form the main circuit of a converter. In addition the converter also contains necessary measurement and control circuits for receiving the measured feedback signals and for driving the load in a desired reference value manner. The control circuits also maintain the converter in such a state that the desired control actions relating to the load can be implemented. Such control actions include for example maintaining DC link voltage in a desired value, when e.g. an active rectifier is used.

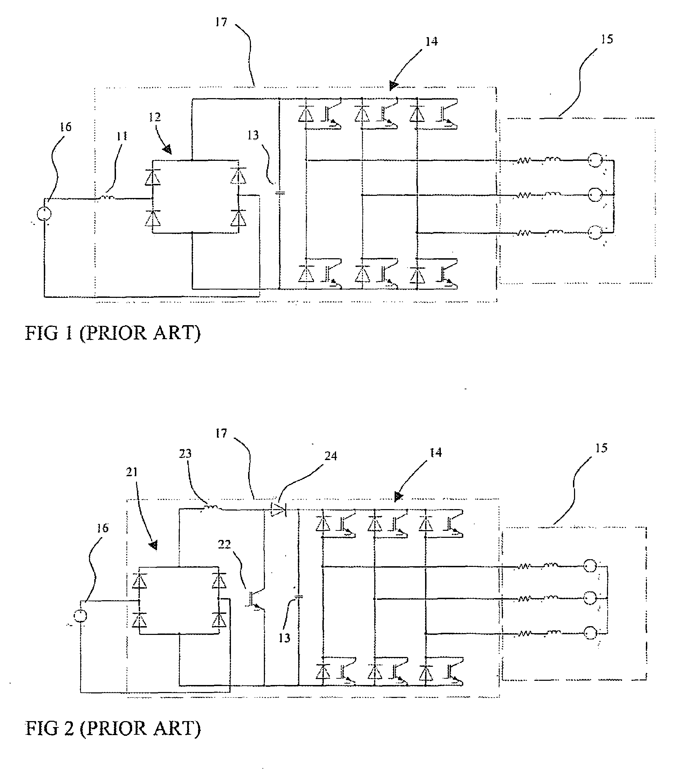

Figure 1 shows a single-phase to three-phase converter 17, which contains an input filter 11 for suppressing current harmonics, a diode bridge 12 for rectifying the AC voltage of the mains 16, a capacitor 13 and an inverter stage 14 for supplying voltage with variable amplitude and frequency to a load 15. In Figures 1, 2 and 3 the load 15 is indicated to be a motor, which is shown as an equivalent circuit.

Figure 2 in turn shows another structure of a single-phase to three-phase converter. In this prior art modification the diode bridge 21 contains a simple circuit for correcting the input power factor, the inverter stage being similar to the one in Figure 1. This boost-type power factor correction (PFC) circuit comprises a controllable switch 22, an inductor 23 and a diode 24. The inductor 23 acts both for reducing the current harmonics and as a boost inductor for boosting the voltage of the DC link. The diode 24 is required to prevent the short circuit of the DC capacitor during the switch 22 conduction interval and to block the boosted voltage. As is well known, the PFC circuit corrects the input power factor of the converter by making the current drawn from the mains to be in the same phase and shape as the mains voltage.

The inverter stage 14 of Figures 1 and 2 contains two controllable switches for each output phase, i.e. six switches in total for forming a three-phase output. The controllable switches connect the output phases either to negative or positive voltage of the DC link. By modulating the switches of the inverter an AC voltage with variable frequency is achieved in a known manner.

The structures shown in Figures 1 and 2 are examples of typical converters used in low-voltage applications. Such applications may include special purpose drives in household appliances where the motor is selected to be a three-phase motor. The converters of Figures 1 and 2 may also be provided as a stand-alone converter intended for driving a motor in user-defined applications. Such applications may include driving of pumps or blowers or controlling of electric tools.

In the structure of Figure 1 the input filter needs to be massive in order for the converter to comply with the standards governing the current harmonics. The structure of Figure 2 allows minimizing the filter choke by using a controllable switch in the PFC-circuit feeding the DC link.

Single-phase to three-phase converters are mainly used in household or small industry environments where single-phase mains voltage is available. The structure of Figure 1 has a large inductor and six controllable switches, which makes the costs relating to components rather high. In the structure of Figure 2 the number of controllable switches is seven, but the used inductor is smaller and cheaper. Further the structures shown in Figures 1 and 2 are designed for only one mains voltage, and doesn't therefore provide for a universal structure. Thus the problem relating to the prior art single-phase to three-phase converters is the number of controllable components and the large inductor required, which both contribute greatly to the total manufacturing costs. It would thus be desirable to have a minimum number of controllable switches in a lightweight converter that converts single-phase mains voltage to a three-phase output voltage and that can be used with multiple mains voltages.

Document US 5,563,487 discloses a control circuit for an inductive load. In this control circuit the rectifier is formed of a diode bridge and a controllable switch and inductor forming a PFC-circuit.

### BRIEF DESCRIPTION OF THE INVENTION

An object of the present invention is to provide a converter so as to solve the above problems. The object of the invention is achieved by a converter which is characterized by what is stated in the independent claim. The preferred embodiments of the invention are disclosed in the dependent claims.

The invention is based on forming two phases of three-phase inverter output with controllable switches, while the third output phase is formed of the center point of the DC link. The single-phase to three-phase converter of the invention thus comprises only five controllable switches. The rectifier circuit provides a DC voltage the magnitude of which is the maximum of the mains voltage. DC voltage can be increased by using the boost characteristics of the PFC-circuit.

In the present invention the converter is modifiable such that the voltage produced to the DC link is doubled, i.e. the magnitude of the voltage is twice the mains phase voltage maximum or more. The structure of the invention enables the converter of the invention to be used in a smaller mains voltage with only a slight modification using the same component lay-out.

An advantage of the converter of the invention is that the number of active components used in the main current path is reduced compared to the prior art structures. A further advantage of the invention is that the structure enables voltage doubler characteristics to be used when desired. Further the rectifier and the inverter stage of the converter can be optimised separately.

### BRIEF DESCRIPTION OF THE DRAWINGS

In the following the invention will be described in greater detail by means of preferred embodiments with reference to the attached drawings, in which
Figure 1 shows a prior art converter structure;
Figure 2 shows another prior art converter structure;
Figure 3 shows the main circuit of a converter according to the present invention; and
Figure 4 shows an example of a control circuit for the rectifier of the converter.

### DETAILED DESCRIPTION OF THE INVENTION

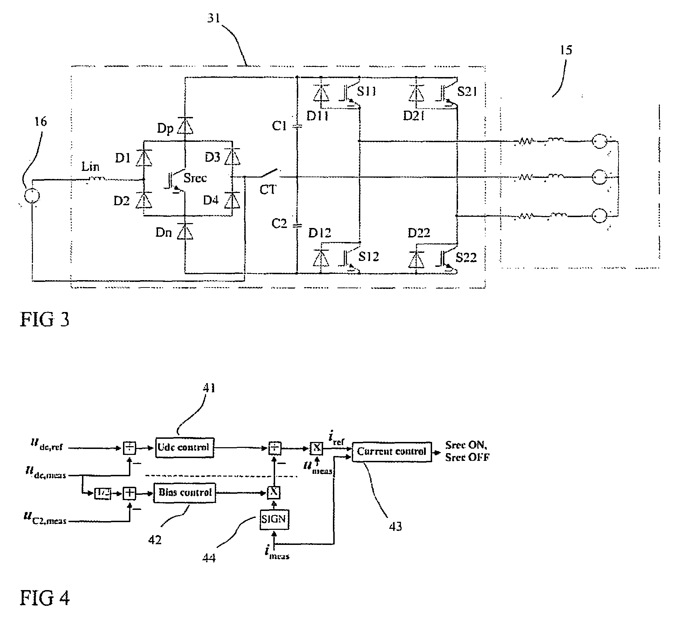

Figure 3 shows the structure of a single-phase to three-phase converter 31 according to the present invention. In this structure the rectifier stage is formed of a diode bridge D1, D2, D3, D4 having an input and an output. The input of the diode bridge is formed between diodes D1, D2 and diodes D3, D4, and the output is formed between diodes D1, D3 and diodes D2, D4. An inductor Lin is connected to the positive input of the diode bridge.

A controllable switch Srec is connected between the output terminals of the diode bridge, and a blocking diode Dp is connected to the positive output of the diode bridge between said positive output and the positive rail of a DC link. Similarly another blocking diode is connected between the negative output of the diode bridge and the negative rail of the DC link. The polarities of the blocking diodes are such that a current can flow from the positive output of the diode bridge to the positive rail of the DC link and from the negative rail of the DC link to the negative output of the diode bridge.

The purpose of the controllable switch Srec in the diode bridge is to act together with the inductor Lin for correcting the power factor and to act as a voltage booster. Switch Srec is controlled in a known manner to perform power factor correction by modifying the input current shape.

Figure 3 shows the DC link containing a series connection of capacitors C1 and C2, i.e. a capacitor bank having a center point that can be connected to. Capacitor bank is connected in a normal manner across the positive and negative voltage rails.

The inverter stage of the converter of the invention is composed of four controllable switches S11, S21, S12, S22 and their parallel diodes D11, D21, D12, D22. These switches and respective parallel diodes form two phases of the three-phase output. The outputs are formed by connecting switches in series between the positive and negative rails of the DC link, the output being in the middle of said series connection. With these switches either positive or negative voltage of the DC link can be connected to the output.

While two outputs are formed with controllable switches, the third is formed directly from the voltage of the center point of the capacitor bank. Although this output phase cannot be modulated in the normal manner, the other two phases can be controlled such that the voltage of the third phase is taken into account. Preferred modulation methods are described shortly below.

Figure 3 further shows a connection switch CT which can be e.g. relay, contactor, jumper or similar means that can be used to connect the center point of the capacitor bank to the negative input of the AC supply. With the connection switch CT closed, the voltage of the DC link is doubled with respect to the contactor being in the open position. This is due to the fact that the current charging the DC link capacitor bank charges only either the upper or lower half of the capacitor bank. Thus when a current flows from the mains through diode D1 and when switch Srec is blocking, the current returns to the mains via diode Dp and capacitor C1. When the direction of the current is the opposite and Srec is blocking, the current flows through diodes Dn and D2 charging capacitor C2. Both of the capacitors C1 and C2 charge to maximum of the mains voltage, thereby doubling the voltage of the DC link.

According to the invention the center point of the capacitor bank is connectable to the neutral AC supply line. This means that in the converter circuitry there are means that can be optionally used for adapting the circuitry to different supply voltages. When the voltage doubling function is in use, i.e. the center point is connected, the converter is suitable for use in lower supply voltage without any other changes. These two mains voltage levels that can be taken into account may be for example 110 VAC used in the USA and 230 VAC used in Europe. The voltage doubling function can be enabled or disabled automatically with the converter control system, which sets the connection switch CT to the ON state (conducting) when voltage doubling mode is required. The converter control system sets the connection switch CT to the OFF state (blocking) when voltage doubling is not required. For the automatic connection switch control, the connection switch CT must be controllable, e.g. relay or contactor. Even semiconductor switches can be used. The connection switch CT can also be implemented as a manually operated changeover switch in the casing of the converter or inside the casing. Also a jumper or similar connection can be used for a connection switch CT implementation.

When a connection between the capacitor bank and the AC input is a selectable option, the change in the operation mode should also be taken into account. This means that the voltage balancing in the control circuit is adapted to a selected operation mode, i.e. "voltage doubling" or "no voltage doubling". The preferred control circuit is shown in the block diagram of Figure 4 and described below.

Even if the selection of the supply voltage is not left to the end user, considerable savings are achieved when the same circuit configuration can be used on two voltage levels.

Single-phase to three-phase converters also require a control system. The control system is used in the control of the controllable switches in a required way. In the present invention the control system is required for both the rectifier and the inverter stage since both comprise controllable switches.

### Rectifier control

Figure 4 presents a block diagram showing a circuitry that can be used for controlling the rectifier of the converter of the present invention. As mentioned above, the control must take account the two modes in which the converter of the invention can operate, i.e. voltage doubling and "ordinary" rectified voltage, which further means that the balance of the capacitor bank voltages should be ensured.

When the voltage doubling is in use, the control system of Figure 4 operates as follows. The total voltage of the capacitor bank is controlled with a block 41, the output of which rises when the measured capacitor bank voltage u_{dc, meas} is smaller than the given reference u_{dc, ref} and similarly lowers when the measured value is higher than the reference. The output of the voltage control block affects directly the line current reference i_{raf}, whereby the output controls the charge moving to the intermediate circuit, which in turn affects the voltages of the capacitors.

The voltage balance between the series connected capacitors is controlled with a bias control block 42. The output of the block 42 grows when the voltage of the lower capacitor C2 is smaller than half of the measured total capacitor voltage. The output of the bias control block 42 is multiplied by the sign of the line current, after which the obtained signal is added to the output of the voltage control block 41. In this way the voltage balance between the capacitor is affected by the amplitude of the line current reference.

The sum obtained above is further multiplied by the waveform of the line voltage i.e. by the measured line voltage, and the result is the line current reference i_{ref}.

A current control block 43 compares the current reference to the measured current value iₘₑₐₛ and controls the switch Srec either to the conducting or blocking state by using hysteresis control. The current control method used in the block 43 may also be another suitable control method.

When the voltage is not doubled, i.e. the contactor CT is in the open position, the rectifier control is simplified. The dashed line in Figure 4 divides the control circuit into two parts. The lower part is not required when the voltage doubling is not in use, i.e. when the voltage balancing is not needed. The balancing can be disabled simply by setting zero as the gain value for the bias control block 42. When the block 42 outputs a zero value, it does not affect the total current and voltage control.

As mentioned above, when the main circuit of the converter is changed with the contactor CT or by any other similar means that can optionally connect the center point of the capacitor bank to the input bridge, also the control circuitry is changed. The change in the control circuitry of Figure 4 can be carried out by changing the value in the output of the bias control block either to the value from the block or to zero. Similarly a change may be done to the block 42 itself, such that it produces its normal value when in control operation or it produces zero. These changes can also be automated depending on the voltage level fed to the converter.

### Inverter control

The modulation of the inverter stage can be carried out for example by using space vector modulation as described in Blaabjerg F., Neacsu D.O., Pedersen J.K., "Adaptive SVM to Compensate DC Link Voltage Ripple for Four-Switch Three-Phase Voltage-Source Inverters", IEEE Transactions on Power Electronics, Vol. 14, No. 4, July 1999, Pages 743-752.

Another possibility for the modulation of the inverter stage is based on using hysteresis limits in vector modulation. This kind of modulation is described both in Azab M., Orille A.L., "Novel Flux and Torque Control of Induction Motor Drive Using Four Switch Three Phase Inverter", The 27th Annual Conference of the IEEE Industrial Electronics Society, IECON'01, Volume 2, 29 Nov. - 2 Dec. 2001, Pages 1268-1273 and Sun D., He Z., He Y., Guan Y., "Four-Switch Inverter Fed PMSM DTC with SVM Approach for Fault Tolerant Operation", IEEE International Electric Machines & Drives Conference, 2007, Volume 1, 3-5 May 2007, Pages 295-299. In these modulation schemes the four active voltage vectors are used one by one. The voltage vector in use is changed when, according to the control algorithm, either flux or torque goes over the set hysteresis limits.

## Claims

1. Single-phase to three-phase converter (31) comprising a rectifier stage rectifying a single phase AC input voltage (16), a link and an inverter stage, wherein
the rectifier stage comprises a filter choke (Lin), one controllable switch (Srec) for power factor correction, rectifying diodes (D1, D2, D3, D4) arranged in a diode bridge configuration having input terminals and output terminals, the controllable switch (Srec) being connected to the output terminals of the diode bridge, an upper blocking diode (Dp) arranged between the positive output terminal of the diode bridge and the positive input of the DC link and a lower blocking diode (Dn) arranged between the negative output terminal of the diode bridge and the negative input of the DC link,
the DC link comprises a capacitor bank (C1, C2) connected between the DC link, which capacitor bank has a center point, wherein the inverter stage comprises
three phase outputs, two of which are formed with a series connections of controllable switches (S11, S12, S21, S22) arranged between the DC link for switching either positive voltage or negative voltage of the DC link to the phase outputs, and one phase output is formed of the voltage of the center point of the capacitor bank (C1, C2), and in that
the center point of the capacitor bank is configured to be connected to the neutral line of the single-phase AC input by using a controllable connection switch (CT) element providing thereby doubled voltage to the DC link.

2. A converter according to claim 1, **characterized in that** the connection switch (CT) element is implemented by a relay, a contactor or a semiconductor switch.

3. A converter according to claim 1, **characterized in that** the center point of the capacitor bank can be connected to the neutral line of the AC input by using a hand operated switch (CT).

4. A converter according to claim 1, **characterized in that** the center point of the capacitor bank can be connected to the neutral line of the AC input by using a jumper wire (CT).

5. A converter according to any one of the previous claims 1 to 4, **characterized in that** the converter also comprises a control circuit adapted to control the controllable connection switch (CT), the control circuit having two operation modes, the first operation mode being used when the center point of the capacitor is connected to the neutral line of the single-phase AC input and the second operation mode being used when the center point of the capacitor is not connected to the neutral line of the single-phase AC input.

## Patentansprüche

1. Einphasen-zu-Dreiphasen-Stromrichter (31) mit einer Gleichrichterstufe, die eine einphasige Wechselstromeingansspannung (16) gleichrichtet, einem Gleichstromzwischenkreis und einer Wechselrichterstufe, worin
die Gleichrichterstufe eine Filterdrossel (Lin), einen steuerbaren Schalter (Srec) für Blindleistungskompensation, in einer Diodenbrückenkonfiguration mit Eingangsklemmen und Ausgangsklemmen angeordnete Gleichrichterdioden (D1, D2, D3, D4) aufweist, wobei der steuerbare Schalter (Srec) mit den Ausgangsklemmen der Diodenbrücke verbunden ist, eine obere Sperrdiode (Dp) zwischen der positiven Ausgangsklemme der Diodenbrücke und dem positiven Eingang des Gleichstromzwischenkreises angeordnet ist und eine untere Sperrdiode (Dn) zwischen der negativen Ausgangsklemme der Diodenbrücke und dem negativen Eingang des Gleichstromzwischenkreises angeordnet ist,
der Gleichstromzwischenkreis eine zwischen dem Gleichstromzwischenkreis verbundene Kondensatorbank (C1, C2) aufweist, welche Kondensatorbank einen Mittelpunkt besitzt, wobei die Wechselrichterstufe:
drei Phasenausgänge aufweist, zwei von denen mit Serienschaltungen von steuerbaren Schaltern (S11, S12, S21, S22) gebildet werden, die zwischen dem Gleichstromzwischenkreis angeordnet sind, um entweder eine positive Spannung oder eine negative Spannung des Gleichstromzwischenkreises auf die Phasenausgänge zu schalten, und ein Phasenausgang aus der Spannung des Mittelpunkts der Kondensatorbank (C1, C2) ausgebildet wird und
der Mittelpunkt der Kondensatorbank konfiguriert ist, mit dem Nullleiter des einphasigen Wechselstromeingangs verbunden zu sein, indem ein steuerbares Verbindungsschalterelement (CT) eingesetzt wird, das dabei eine verdoppelte Spannung für den Gleichstromzwischenkreis bereitstellt.

2. Stromrichter nach Anspruch 1, **dadurch gekennzeichnet, dass** das Verbindungsschalterelement (CT) mit einem Relais, einem Schütz oder einem Halbleiterschalter realisiert wird.

3. Stromrichter nach Anspruch 1, **dadurch gekennzeichnet, dass** der Mittelpunkt der Kondensatorbank mit dem Nullleiter des Wechselstromeingangs anhand eines handbetätigten Schalters (CT) verbunden werden kann.

4. Stromrichter nach Anspruch 1, **dadurch gekennzeichnet, dass** der Mittelpunkt der Kondensatorbank mit dem Nullleiter des Wechselstromeingangs anhand eines Rangierdrahts (CT) verbunden werden kann.

5. Stromrichter nach einem der vorhergehenden Ansprüche 1 bis 4, **dadurch gekennzeichnet, dass** der Stromrichter auch einen Steuerstromkreis aufweist, der angeordnet ist, den steuerbaren Verbindungsschalter (CT) zu steuern, welcher Steuerstromkreis zwei Betriebsmodi besitzt, wobei der erste Betriebsmodus eingesetzt wird, wenn der Mittelpunkt des Kondensators mit dem Nullleiter des einphasigen Wechselstromeingangs verbunden ist, und der zweite Betriebsmodus eingesetzt wird, wenn der Mittelpunkt des Kondensators nicht mit dem Nullleiter des einphasigen Wechselstromeingangs verbunden ist.

## Revendications

1. Convertisseur monophasé à triphasé (31) comportant un étage redresseur, redressant une tension d'entrée CA monophasée (16), une liaison CC et un étage inverseur, dans lequel :
l'étage redresseur comporte une bobine de filtrage (Lin), un commutateur contrôlable (Srec) pour la correction de facteurs de puissance, des diodes de redressement (D1, D2, D3, D4) agencées dans une configuration de pont de diodes présentant des bornes d'entrée et des bornes de sortie, le commutateur contrôlable (Srec) étant connecté aux bornes de sortie du pont de diodes, une diode de blocage supérieure (Dp) agencée entre la borne de sortie positive du pont de diodes et l'entrée positive de la liaison CC, et une diode de blocage inférieure (Dn) agencée entre la borne de sortie négative du pont de diodes et l'entrée négative de la liaison CC ;
la liaison CC comporte une batterie de condensateurs (C1, C2) connectés entre la liaison CC, laquelle batterie de condensateurs présente un point central, dans lequel l'étage inverseur comporte :
trois sorties de phase, dont deux sont formées avec des connexions en série de commutateurs contrôlables (S11, S 12, S21, S22) agencées entre la liaison CC pour commuter une tension positive ou une tension négative de la liaison CC vers les sorties de phase, et une sortie de phase est formée de la tension du point central de la batterie de condensateurs (C1, C2) et dans lequel :
le point central de la batterie de condensateurs est configuré de manière à être connecté à la ligne neutre de l'entrée CA monophasée en utilisant un élément de commutateur à connexions contrôlables (CT), fournissant par conséquent une tension double à la liaison CC.

2. Convertisseur selon la revendication 1, **caractérisé en ce que** l'élément de commutateur à connexions contrôlables (CT) est mis en oeuvre par un relai, un contacteur ou un commutateur à semi-conducteurs.

3. Convertisseur selon la revendication 1, **caractérisé en ce que** le point central de la batterie de condensateurs peut être connecté à la ligne neutre de l'entrée CA en utilisant un commutateur exploité manuellement (CT).

4. Convertisseur selon la revendication 1, **caractérisé en ce que** le point central de la batterie de condensateurs peut être connecté à la ligne neutre de l'entrée CA en utilisant un fil de liaison (CT).

5. Convertisseur selon l'une quelconque des revendications 1 à 4, **caractérisé en ce que** le convertisseur comporte également un circuit de commande apte à commander le commutateur à connexions contrôlables (CT), le circuit de commande présentant deux modes d'exploitation, le premier mode d'exploitation étant utilisé lorsque le point central du condensateur est connecté à la ligne neutre de l'entrée CA monophasée et le second mode d'exploitation étant utilisé lorsque le point central du condensateur n'est pas connecté à la ligne neutre de l'entrée CA monophasée.
